# EUROPÄISCHE PATENTSCHRIFT

(11) **EP 1 203 870 B1**
(45) Veröffentlichungstag und Bekanntmachung des Hinweises auf die Patenterteilung: **21.11.2007**
(21) Anmeldenummer: 01121422.8
(22) Anmeldetag: 07.09.2001
(51) Int. Cl.: F01P 11/18

(54) **Vorrichtung zur optischen Kontrolle des Kühlmittelfüllstandes einer Brennkraftmaschine in einem Flüssigkeitsbehälter**
Device for optically monitoring the coolant level of an internal combustion engine in a liquid container
Dispositif de contrôle optique de niveau de fluide de refroidissement d'un moteur à combustion interne dans un réservoir de liquide

(30) Priorität: 03.11.2000 DE 10054491
(43) Veröffentlichungstag der Anmeldung: 08.05.2002
(73) Patentinhaber: Bayerische Motoren Werke Aktiengesellschaft, 80809 München (DE)
(72) Erfinder: Brielmair, Martin, 85435 Erding (DE)

(56) Entgegenhaltungen:
- FR-A- 2 492 514
- GB-A- 1 110 019
- US-A- 3 397 808

## Beschreibung

Die Erfindung betrifft eine Vorrichtung zur optischen Kontrolle des Kühlmittelfüllstandes einer Brennkraftmaschine gemäß der im Oberbegriff des Patentanspruchs 1 genannten Art.

Die Erfindung geht von der deutschen Offenlegungsschrift 29 09 940 aus. In dieser ist eine Einrichtung zur optischen Kontrolle des Kühlmittelstandes beschrieben. In einer Wand der Ausgleichskammer des Kühlmittelbehälters, im Bereich des Kühlmittelstandes, ist ein aus transparentem Material bestehendes Schaufenster angeordnet. Durch dieses Schaufenster kann der aktuelle Kühlmittelpegelstand durch einen Blick auf die Seite der Ausgleichskammer kontrolliert werden. Zwei Füllstandsmarkierungen am Schaufenster bezeichnen den maximalen und den minimalen Kühlmittelfüllstand.

Nachteilig bei dieser Anordnung ist es, dass eine Beobachtung des Füllstandes während des Einfüllvorganges von Kühlmittel in das Kühlsystem der Brennkraftmaschine praktisch nicht möglich ist.

Aufgabe der Erfindung ist es, eine Anordnung aufzuzeigen, welche die Beobachtung des aktuellen Kühlmittelfüllstandes während einer Befüllung des Kühlsystems ermöglicht.

Diese Aufgabe wird erfindungsgemäß durch die Merkmale des Kennzeichens vom Patentanspruchs 1 gelöst. Vorteilhaft kann der aktuelle Füllstand durch die Einfüllöffnung des Flüssigkeitsbehälters während eines Einfüllvorganges beobachtet werden. Eine Unterbrechung des Einfüllvorganges zum Ablesen des aktuellen Füllstandes durch einen Blick auf die Seite des Flüssigkeitsbehälters ist nicht notwendig. Ferner bietet diese Art der Füllstandsanzeige eine hohe Funktionssicherheit, da keine bewegten Bauteile vorhanden sind. Bei Verwendung eines transparenten Verschlussdeckels ist auch die ständige Kontrolle des Kühlmittelfüllstandes durch die Einfüllöffnung möglich.

Durch die Ausgestaltung gemäß Anspruch 2 werden durch die selbsterklärende Ableselogik Fehlinterpretationen und somit Falschbefüllungen vermieden.

Die konstruktive Ausführung nach Anspruch 3 ist äußerst unempfindlich gegenüber Verschmutzungen und beschleunigt das Ablaufen von Kühlflüssigkeit von den Markierungsflächen. Perlenbildung auf den Markierungsflächen was zu einer Verschlechterung der Ablesbarkeit führt, wird wirkungsvoll vermieden.

Eine weitere Verbesserung der Ablesbarkeit des Kühlmittelfüllstandes wird durch die farbliche Ausgestaltung der Markierungsflächen gemäß Anspruch 4 erreicht.

Vorteilhaft nach Anspruch 5 kann die Anordnung je nach Ausgestaltung des Halteelementes für Flüssigkeitsbehälter jeder Größe eingesetzt werden.

Die Fertigung der Vorrichtung nach Anspruch 6 ist kostengünstig und einfach.

Im Folgenden wird die Erfindung anhand eines bevorzugten Ausführungsbeispieles erläutert.

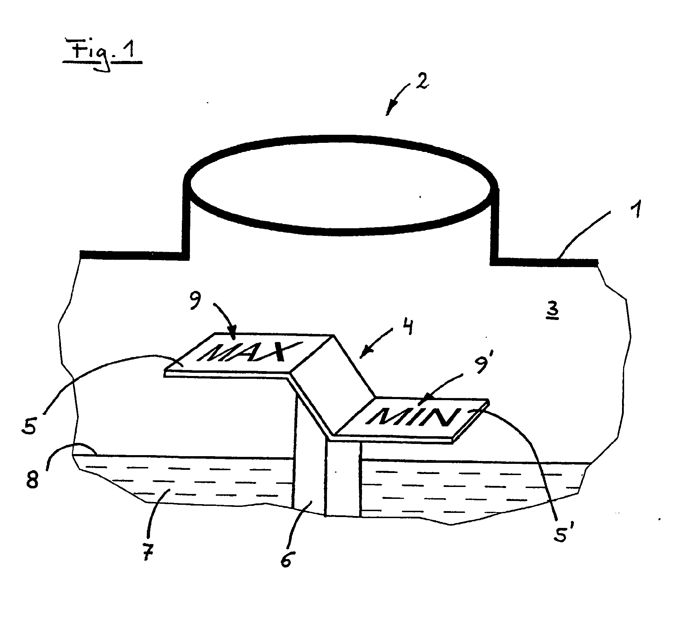

Die einzige Figur zeigt eine Schnittdarstellung durch einen Flüssigkeitsbehälter 1, hier ein Kühlmittelausgleichsbehälter, mit einer Einfüllöffnung 2, durch die eine, in einem Innenraum 3 des Flüssigkeitsbehälters 1 separat angeordnete Füllstandsanzeige 4, sichtbar ist. Diese besteht aus zwei ebenen Markierungsflächen 5, 5' und einem Halteelement 6, welches aus einem Kühlmittel 7 mit einem Kühlmittelfüllstand 8 herausragt.

Unter Kühlmittel 7 wird in dieser Beschreibung grundsätzlich Kühlwasser verstanden, welches je nach Bedarf neben weiteren Mitteln mit Frostschutzmitteln und Antikorrosionsmitteln gemischt ist. Ferner wird davon ausgegangen, dass das hier nicht dargestellte Kraftfahrzeug, in dem der Flüssigkeitsbehälter 1 verbaut ist, waagrecht steht.

Die Markierungsflächen 5, 5' sind an dem, aus dem Kühlmittel 7 herausragenden Ende des Halteelementes 6 in unterschiedlichen Höhen geodätisch angeordnet. Das Halteelement 6 und die Markierungsflächen 5, 5' sind einstückig gefertigt, können jedoch auch als Einzelteile gefertigt und anschließend montiert werden.

Die Markierungsfläche 5 kennzeichnet den maximalen Kühlmittelfüllstand, die Markierungsfläche 5' kennzeichnet den minimalen Kühlmittelfüllstand 8. Auf den Markierungsflächen 5, 5' ist der jeweils anzuzeigende Kühlmittelfüllstand zusätzlich durch eine Beschriftung 9, 9' gekennzeichnet. Die Beschriftungen 9, 9' sind durch Durchbrüche im Material erfolgt. Grundsätzlich ist jedoch jede Art von Beschriftung beispielsweise durch Bedrucken, Ätzen etc., die entsprechend temperatur- und kühlmittelresistent ist, verwendbar.

Die Füllstandsanzeige 4 ist einstückig mit dem Flüssigkeitsbehälter 1 aus einem hellen Kunststoff in einem Spritzgussverfahren hergestellt. Abweichend davon können auch dunkle Kunststoffe verwendet werden. Anzustreben ist jedoch immer eine helle Optik der Markierungsflächen 5, 5'. Diese können bei Verwendung eines dunklen Kunststoffes auch nachträglich hell beschichtet werden.

Neben der einstückigen Fertigung ist auch eine mehrstückige Herstellung mit anschließendem Zusammenbau möglich. Denkbare Fertigungsmöglichkeiten sind Kunststoffschweißverfahren oder die Verwendung von lösbaren Verbindungen.

Zur Befüllung des Flüssigkeitsbehälters 1 wird der nicht dargestellte Verschlussdeckel von der Einfüllöffnung 2 abgeschraubt und durch diese das Kühlmittel in den Flüssigkeitsbehälter 1 eingefüllt. Während dieses Vorganges sind die Markierungsflächen sichtbar, wodurch eine ständige Kontrolle des aktuellen Kühlmittelfüllstandes möglich ist. Unter- beziehungsweise Überfüllung wird somit vermieden. Die Beschriftung 9, 9' in Form von Durchbrüchen verhindert die Ansammlung von Kühlmittelperlen auf den Markierungsflächen 5, 5', was die Ablesbarkeit des aktuellen Kühlmittelfüllstandes 8 erheblich erleichtert.

Bei Verwendung eines durchsichtigern Verschlussdeckels kann der aktuelle Kühlmittelfüllstand 8 ständig kontrolliert werden, ohne auf ein seitliches Schaufenster zu blicken.

### Bezugszeichenliste

- 1: Flüssigkeitsbehälter
- 2: Einfüllöffnung
- 3: Innenraum
- 4: Füllstandsanzeige
- 5, 5': Markierungsfläche
- 6: Halteelement
- 7: Kühlmittel
- 8: Kühlmittelfüllstand
- 9, 9': Beschriftung

## Patentansprüche

1. Vorrichtung zur optischen Kontrolle des Kühlmittelfüllstandes einer Brennkraftmaschine in einem Flüssigkeitsbehälter mit einer verschließbaren Einfüllöffnung, in dessen Innenraum zwei, in unterschiedlicher geodätischer Höhe angeordnete Markierungsflächen einen minimalen und einen maximalen Kühlmittelfüllstand anzeigen und durch die Einfüllöffnung sichtbar sind,
**dadurch gekennzeichnet, dass** zumindest eine separate, ebene Markierungsfläche (5, 5') ortsfest im Innenraum (3) des Flüssigkeitsbehälters (1) ohne Berührung der Innenwand angeordnet ist.

2. Vorrichtung nach Anspruch 1,
**dadurch gekennzeichnet, dass** ein Kühlmittelfüllstand (8) durch Beschriftung (9, 9') der Markierungsfläche (5, 5') ablesbar ist.

3. Vorrichtung nach den Ansprüchen 1 und 2,
**dadurch gekennzeichnet, dass** die Beschriftung (9, 9') durch Durchbrüche in Schriftzeichenform dargestellt ist.

4. Vorrichtung nach zumindest einem der zuvor genannten Ansprüche,
**dadurch gekennzeichnet, dass** die Markierungsfläche (5, 5') hell ist.

5. Vorrichtung nach zumindest einem der zuvor genannten Ansprüche,
**dadurch gekennzeichnet, dass** die Markierungsfläche (5, 5') an einem, weitgehend senkrechten Halteelement (6) angeordnet ist.

6. Vorrichtung nach zumindest einem der zuvor genannten Ansprüche,
**dadurch gekennzeichnet, dass** die Füllstandsanzeige (4) einstückig ist.

## Claims

1. A device in an internal combustion engine for optically monitoring the level of coolant in a container with a closable feed opening, wherein marking surfaces disposed at different geodetic heights in the interior of the container indicate a minimum and a maximum coolant level and are visible through the opening,
**characterised in that** at least one separate flat mounting surface (5, 5') is fixed in the interior (3) of the liquid container (1) without touching the inner wall.

2. A device according to claim 1,
**characterised in that** a coolant level (8) can be read off from lettering (9, 9') on the marking surface (5, 5').

3. A device according to claims 1 and 2,
**characterised in that** the lettering (9, 9') is in the form of apertures in the shape of written characters.

4. A device according to at least one of the preceding claims,
**characterised in that** the marking surface (5, 5') is bright-coloured.

5. A device according to at least one of the preceding claims,
**characterised in that** the marking surface (5, 5') is disposed on a substantially vertical retaining element (61.

6. A device according to at least one of the preceding claims,
**characterised in that** the level indicator (4) is in one piece.

## Revendications

1. Dispositif de contrôle optique du niveau de remplissage de liquide de refroidissement d'un moteur à combustion interne dans un réservoir de liquide comprenant une ouverture de remplissage refermable, dans l'espace intérieur duquel deux surfaces de repère disposées à différentes hauteurs géodésiques indiquent un niveau de remplissage de liquide de refroidissement minimal et maximal et sont visibles à travers l'ouverture de remplissage,
**caractérisé en ce qu'**
au moins une surface de repère plane séparée (5, 5') est disposée fixement dans l'espace intérieur (3) du réservoir de liquide (1) sans contact avec la paroi intérieure.

2. Dispositif selon la revendication 1,
**caractérisé en ce qu'**
un niveau de remplissage de liquide de refroidissement (8) est lisible par une inscription (9, 9') de la surface de repère (5, 5').

3. Dispositif selon les revendications 1 et 2,
**caractérisé en ce que**
l'inscription (9, 9') est représentée par des perçages en forme de lettres.

4. Dispositif selon au moins l'une des revendications précédentes,
**caractérisé en ce que**
la surface de repère (5, 5') est claire.

5. Dispositif selon au moins l'une des revendications précédentes,
**caractérisé en ce que**
la surface de repère (5, 5') est disposée au niveau d'un élément de maintien (6) pratiquement perpendiculaire.

6. Dispositif selon au moins l'une des revendications précédentes,
**caractérisé en ce que**
l'indicateur de niveau de remplissage (4) est fait d'une seule pièce.
